# EUROPEAN PATENT SPECIFICATION

(11) **EP 2 809 438 B1**
(45) Date of publication and mention of the grant of the patent: **25.03.2020**
(21) Application number: 13704535.7
(22) Date of filing: 01.02.2013
(51) Int. Cl.: B01J 13/00, C10L 1/12, C10L 10/06, B82Y 30/00, C01G 49/00, C01F 17/00, C10L 1/10, C10L 1/185, C10L 1/188

(54) **RAPID METHOD FOR PRODUCTION OF CERIUM-CONTAINING OXIDE ORGANIC COLLOIDS**
SCHNELLES VERFAHREN ZUR HERSTELLUNG ORGANISCHER CERHALTIGER OXIDKOLLOIDE
PROCÉDÉ RAPIDE POUR LA PRODUCTION DE COLLOÏDES ORGANIQUES D'OXYDES CONTENANT DU CÉRIUM

(30) Priority: 01.02.2012 US 201261632881 P
(43) Date of publication of application: 10.12.2014
(73) Proprietor: Cerion LLC, Rochester, NY 14610 (US)
(72) Inventor: PROK , Gary, Robert, Rush, NY 14543 (US); WILLIAMS, Stephen, Charles, Rochester, NY 14620 (US)
(74) Representative: Durán-Corretjer, S.L.P.
(86) International application number: PCT/US2013/024342
(87) International publication number: WO 2013/116647

(56) References cited:
- FR-A1- 2 716 388
- US-B1- 6 210 451
- US-B1- 6 271 269

## Description

### FIELD OF THE INVENTION

The present invention relates generally to colloidal nanoparticle dispersions and more specifically to improved processes for the manufacture of cerium-containing oxide colloidal dispersions in solvents having low polarity.

### BACKGROUND OF THE INVENTION

Cerium-containing oxide nanoparticles have many current industrial uses, along with many emerging technical applications. They are well known as important components, for example, in three-way automotive exhaust catalysts, automotive fuel borne catalysts, water gas shift reaction catalysts, polishing and planarization agents, solid oxide fuel cells, hybrid solar cells and ultra-violet sun blockers. There are many synthetic processes for the production of metal oxides, including aqueous and hydrothermal precipitation, spray precipitation, combustion, plasma deposition and electrochemical techniques, among others. While a variety of solvents may be used in these synthetic processes, aqueous reaction chemistries are particularly favored in manufacturing processes where high material through-put is desired. However, conventional aqueous processes - precipitation in particular - are costly as they involve multiple steps that are often time and energy consuming, as well as equipment intensive.

Conventional large-scale metal oxide manufacturing processes can typically be divided into three stages: aqueous precipitation of precursor compounds, calcination to promote chemical reaction and to enhance crystallinity, followed by final particle size adjustment. In more detail, aqueous precipitation includes the initial steps of reactant delivery, reactant dispersal, particle precipitation, isolation, washing, drying, and optional impregnation with other metal ions; calcination involves heating to 400-1000 °C for several hours; followed by grinding, milling or classification to adjust the final particle size, among other steps.

One approach to reduce the number of steps in the aqueous preparation is to employ methods that produce a stable aqueous dispersion (suspension, colloid, sol) of the final particles directly from the initial reactants, thereby avoiding the time, cost and potential contamination inherent in the particle precipitation, isolation, and drying steps. Moreover, if the particles produced in such a direct method are sufficiently pure, wherein the chemical composition of the particles is as desired, and the particles are sufficiently crystalline, then the calcination step may also be eliminated. In addition, if the particle size and size distribution produced by such a direct method are substantially as desired, then the grinding, milling and classification steps may also be eliminated. Direct methods to produce aqueous dispersions (suspensions, colloids, sols) of crystalline cerium-containing oxide nanoparticles without the use of precipitation, isolation, drying, calcination, grinding, milling or classification steps, and the like, are described in commonly assigned US Patent Application No. 12/779,602, now Publication US 2010/0242342 A1, by A.G. DiFrancesco et al*.* The '342 reference discloses stable aqueous dispersions of crystalline cerium-containing nanoparticles in a size range, for example, of 1-5 nanometers.

While substantial progress has been made in eliminating manufacturing steps from the synthetic process by which stable aqueous dispersions of metal oxide nanoparticles are prepared, use of these nanoparticles in applications such as fuel-borne combustion catalysts requires that dispersions of these nanoparticles also exhibit colloidal stability in the fuel. Such stability would also be required for a fuel additive, miscible in the fuel. Thus, these particles, although readily formed and suspended in a highly polar aqueous phase, must then be transferred to a substantially non-polar phase, a process known as solvent shifting. This problem is conventionally addressed by the use of particle stabilizers. However, most particle stabilizers used to prevent particle agglomeration in an aqueous environment are ill-suited to the task of stabilization in a non-polar environment. When placed in a non-polar solvent, such particles tend to immediately agglomerate and, consequently, lose some, if not all, of their desirable particulate properties. Changing stabilizers can involve a difficult displacement reaction or separate, tedious isolation and re-dispersal methods such as, for example, precipitation and subsequent re-dispersal with a new stabilizer using, for instance, a ball milling process, which can take several days and tends to produce polydisperse size frequency distributions.

One approach to simplifying the solvent shifting process employs diafiltration methods and glycol ether solvents having a polarity intermediate between that of water and those of non-polar hydrocarbons. The intermediate polarity colloid is then further shifted to reduce the polarity of the cerium-containing nanoparticle dispersion, as disclosed in commonly assigned U.S. Patent Application Serial Number 12/549776, now Publication US 2010/0152077A1 to Alston et al. Diafiltration, sometimes referred to as cross-flow microfiltration, is a tangential flow filtration method that employs a bulk solvent flow that is tangential to a semi-permeable membrane. However, drawbacks of diafiltration methods include the following: relatively slow filtration rates, substantial financial investment in equipment (e.g. pumps and microfilters), and production of a relatively large amount (e.g. several turnover volumes) of waste solvent.

Use of promoter agents to accelerate transfer of iron oxide nanoparticles from aqueous to non-polar solvents is known in the art. US Patent 7,459,484 to Blanchard et al*.* discloses use of promoter materials having alcohol functionality and having 6 to 12 carbon atoms to promote transfer, and to improve stability of the organic colloid so formed. US Patent Application Publication 2006/0005465 A1 to Blanchard et al. discloses contact of basic aqueous colloids of rare earth or mixed rare earth/other oxide nanoparticles with an acid and a diluent to form an organic colloid dispersion. US Patent 6,271,269 to Chane-Ching et al. discloses direct transfer of cerium oxide or doped cerium oxide colloidal particles from a counterpart aqueous dispersion. Use of alcohol-based promoters is disclosed as well. However, high process temperatures and times for the transfer of the colloidal particulates represent a significant limitation of the prior art process. It is also apparent that concern over the presence of ionic constituents, and other materials needed to bring about the formation of the colloidal particulate material in the aqueous reaction mixture, affects the viability of the direct process.

Thus, progress has been achieved in reducing the cost of producing and solvent shifting aqueous dispersions of cerium-containing nanoparticles. However, further improvements in manufacturing efficiency are desired, particularly in the case of nanoparticle dispersions used as fuel-borne combustion catalysts that require dispersion stability in both a low-polarity solvent carrier of a fuel additive or in the fuel itself.

It would be very desirable to transfer oxide nanoparticles directly from the aqueous precipitation reaction mixture in which the nanoparticles are formed, to a substantially non-polar phase, at low temperatures, to reduce manufacturing hazards in dealing with combustible liquids. It is also advantageous to reduce the total process time necessary for the efficient transfer of oxide nanoparticles from the aqueous to the substantially non-polar phase. At the same time it is important that the nanoparticle colloidal dispersions that are the fuel additives exhibit excellent colloidal stability and good fluid flow properties at low ambient temperatures.

### SUMMARY OF THE INVENTION

The present invention has various embodiments that provide solutions to the need for simple, rapid, low temperature processes for the production of stable doped or un-doped cerium oxide nanoparticle dispersions in solvent systems having low-polarity.

The invention is directed to a process according to claim 1.

The inventive process can use conventional cerium-containing oxide aqueous nanoparticle dispersions. The nanoparticles of the acid aqueous dispersion are transferred to a substantially non-polar liquid comprising an amphiphilic material, such as heptanoic acid or octanoic acid, and, one or more low-polarity solvents. No promoter materials, such as have been used in analogous prior art extractions of nanoparticles from stable aqueous colloidal dispersions to stable substantially non-polar colloidal dispersions, are used in the inventive process. With the use of particular amphiphilic materials, such as heptanoic acid or octanoic acid, extraction of nanoparticles from the aqueous colloid phase and separation of the aqueous and substantially non-polar colloidal phases occur, in some embodiments, at room temperature in seconds, with no need for the additional cost or complexity of promoter materials. Importantly, the amphiphilic materials reduce the temperature necessary to achieve a rapid phase separation, while providing high extraction yield of nanoparticles into the low polarity organic phase. Low temperatures and reduced time at temperature during the processing have benefits of lower process energy costs and moreover, reduced risk of hazard in managing the often combustible organic materials during processing, as well as simplifying equipment and facility requirements.

For the inventive process conventional cerium-containing oxide nanoparticle precipitates can be collected from the aqueous reaction mixture in which they were formed. Collection can be by filtration, centrifugation, and the like, and includes washing to remove unwanted constituents from the aqueous reaction mixture. The washed nanoparticulates may then be in the form of a powder or a paste. The nanoparticles are then re-dispersed into an acid aqueous environment. The nanoparticles in the aqueous environment are then transferred to a low-polarity liquid comprising specific amphiphilic materials, such as heptanoic acid and octanoic acid, and one or more low-polarity solvents. Importantly, the amphiphilic materials, such as heptanoic acid and octanoic acid, reduce the temperature necessary to achieve the rapid phase separation while providing high extraction yield of nanoparticles to the organic phase. Low temperatures and reduced time at temperature during the processing have benefits of lower process energy costs and moreover, reduced risk of hazard in managing the often combustible organic materials during processing, as well as simplifying equipment and facility requirements.

In another aspect, the inventive process uses an aqueous acidic colloidal dispersion of cerium-containing oxide nanoparticles which is prepared without a conventional nanoparticle isolation step, thereby directly using the aqueous colloid resulting from the nanoparticle synthesis reaction mixture in the first step of the extraction process. By eliminating the conventional steps of nanoparticle isolation and washing, a dramatic simplification of conventional prior art processes is achieved. The inventive process reduces the process temperatures and waste, to significant economic advantage. Process simplification is achieved by directly using the aqueous acidic colloid of the nanoparticle synthesis process for transfer of nanoparticles to form the substantially non-polar colloid. The resulting substantially non-polar colloid is a stable dispersion of cerium-containing oxide nanoparticles.

In another aspect the inventive direct transfer of nanoparticles from aqueous colloid to substantially non-polar colloid phase is accomplished at low process temperatures with substantially complete transfer of nanoparticles to the stable, substantially non-polar colloid.

In a further aspect, the invention provides stable, substantially non-polar, cerium-containing oxide nanoparticle colloids at low process temperatures, and having desired low temperature flow and other characteristics, by addition of glycol ethers to the separated substantially non-polar colloid.

The substantially non-polar colloid of cerium-containing oxide nanoparticles produced by the inventive process is characterized as having reduced contamination from ionic constituents, aqueous stabilizer material, and free water, wherein such components originate in the aqueous colloid reaction mixture.

### DETAILED DESCRIPTION OF THE INVENTION

For effectiveness in many end-use applications, nanoparticle size distributions with mean diameters ranging from below about 100 nm to below about 3 nm are useful.

As used herein, the terms dispersion, colloid, suspension, sol, colloid dispersion, and colloidal dispersion are used interchangeably to mean a stable biphasic mixture of a discontinuous phase (e.g., nanoparticles) within a continuous phase (e.g., liquid or other solvent medium).

As used herein, the term cerium-containing oxide includes doped and un-doped cerium oxides. Doped cerium oxide compounds include those with the formula Ce₍₁ₓ₎MₓO_{(2-δ)} where M is a divalent or trivalent metal and δ is indicative of oxygen vacancies. It should be recognized by one skilled in the chemical art that dopant metal M, in addition to being either substitutionally or interstitially doped into the cerium oxide crystal structure, could be present as oxides of metal M, either as separate nanoparticles or nanocrystals, or as nanoparticles or nanocrystals in agglomeration (composite) with other doped or un-doped cerium oxide nanocrystals. In various embodiments, nanoparticles comprised of crystalline substitutionally doped or un-doped cerium oxide phases, are present. In other embodiments, nanoparticles comprised of non-crystalline metal oxide phases, such as amorphous iron oxide phases, are present. In various embodiments, dopant metal M is Fe, Zr, Pd, Pt, Ag, Co, Cu, and Ni. In particular embodiments, nanoparticles of a nominal composition of Ce₍₁₋ₓ₎FeₓO_{(2-δ)} wherein x ranges from about 0.01 to 0.8, or from about 0.5 to 0.7, and 2-δ ranges from about 1 to 2, such as, for example, from about 1.5 to 2, are employed in the inventive process.

The invention relies in part, on the discovery of the effectiveness of heptanoic acid or octanoic acid in aiding the extraction or transfer of cerium-containing oxide nanoparticles or mixtures thereof from aqueous to substantially non-polar solvents, at low process temperatures, and at comparatively very high rates. Use of heptanoic acid or octanoic acid has been shown by the inventors to accelerate the phase separation of aqueous and substantially non-polar colloid phases formed by the mixing of aqueous colloidal dispersions with heptanoic acid or octanoic acid and the substantially non-polar materials including a solvent or combination of solvents. With the use of heptanoic acid or octanoic acid, extraction of nanoparticles from the aqueous colloid phase can occur at room temperature in seconds, with no need for the additional cost or complexity of promoter materials. The mixing of the aqueous colloid and heptanoic acid or octanoic acid provides an emulsion. In the presence of heptanoic acid or octanoic acid, the emulsion separates at room temperature or modestly elevated temperatures into an aqueous solution phase and an organic colloid containing substantially all of the nanoparticles from the aqueous colloid, and the heptanoic acid or octanoic acid. With the addition of at least one substantially non-polar solvent, the substantially non-polar colloids so-formed, exhibit excellent colloidal stability. To the substantially non-polar colloid, other materials may be added to enhance colloidal stability, to enhance low temperature flow properties, and to raise the flashpoint temperature of the substantially non-polar colloid and to provide other advantages as set forth below.

As mentioned previously, US Patent 6,271,269 to Chane-Ching et al discloses direct transfer of cerium oxide or doped cerium oxide colloidal particles from a counterpart aqueous dispersion. The range of temperatures disclosed for the transfer reaction is from higher than 60 °C to 150 °C, with a preferred range of from 80-100 °C. Disclosed Examples were carried out at 90 °C.

According to the present invention, the amphiphilic materials comprise carboxylic acids having from 7 to 9 carbon atoms, such as heptanoic acid, octanoic acid, nonanoic acid and mixtures thereof. In particular embodiments these amphiphilic materials reduce the temperature and time required to achieve phase separation while providing high extraction yield of nanoparticles to the organic phase. Still other materials that can be used in combination with these amphiphilic materials within the purposes of the invention, including materials that are known to inhibit the fouling of diesel fuel injectors in diesel engines. Such antifouling agents include Polyisobutylene Succinic Anhydride (PIBSA). Reduced temperatures and reduced time at temperature during the processing have benefits of lower process energy costs and, moreover, reduced risk of hazard in managing the organic combustible materials during processing, as well as simplifying equipment and facility requirements.

In particular embodiments, substantially non-polar (low-polarity) solvents include, alone or in combination, aliphatic hydrocarbons and mixtures thereof, and alicyclic hydrocarbons and their mixtures. In other embodiments, non-polar solvents include diesel fuel, biodiesel fuel, naphtha, kerosene, gasoline, and commercially available petroleum derivatives such as isoparaffin distillates (e.g., Isopar®), hydrotreated petroleum distillates (e.g., Kensol® 48H and Kensol® 50H available from American Refining Group, Ltd of Bradford, PA (USA); or Calumet 420-460 available from Calumet Lubricants Co. of Cotton Valley, LA (USA)). Kensol® 48H and Kensol®50H are used in particular embodiments as components of fuel-additive applications of the invention because of their low sulfur content, high flashpoint, and low concentration of components having unsaturated bonds. Solvents having some concentration of aromatics, for example, Solvesso® type solvents, may be useful for the purposes of the invention. Low cost may be another driver for the choice of a particularly preferred substantially non-polar solvent. In various embodiments, the substantially non-polar solvent comprises from about 50-65 wt.% of the total substantially non-polar liquid used to form the emulsion mixture.

In various embodiments, glycol ether addenda include ethylene glycol monobutyl ether, diethylene glycol monomethyl ether (DEGME), propylene glycol monomethyl ether (PGME), diethylene glycol monoethyl ether, diethylene glycol monobutyl ether, tri(ethylene glycol) monoethyl ether, tetra(ethylene glycol) dimethyl ether, propylene glycol, dipropylene glycol monomethyl ether, tri(propylene glycol) monomethyl ether, and combinations thereof. Other addenda used instead of or in combination with the glycol ethers include alcohols such as heptanol, 2-ethylhexanol, and the like. Alkanes, such as those having from 5 to 15 carbon atoms, alkenes such as butadiene, and mixtures thereof, can also be useful addenda, alone or in combination with the other addenda. Considerations for the specific choice of and relative amount of addenda components include satisfying product requirements regarding colloidal stability, low temperature flow, flashpoint, cost, and health/environmental considerations.

The aqueous doped or un-doped cerium oxide colloid that is to be directly transferred or extracted into a non-polar phase could be formed according to a number of known approaches. For example those described in co-pending US Application 12/779,602 now published as US2010/0242342, to Reed et al*,* constitute a preferred embodiment. Such an aqueous colloid as formed in its reaction vessel is directly useful for transfer to substantially non-polar colloid phase, even though the aqueous colloids have constituent components comprising reactant remnants and addenda. In other embodiments, nanoparticles formed as aqueous colloids using other well-known processes can be isolated and washed and then re-dispersed in water to form another aqueous colloid that can be used as a starting material for the inventive transfer process discussed herein.

In particular embodiments, the temperature range for the formation of the emulsion, transfer of the nanoparticles between aqueous and substantially nonpolar phases, and separation of the emulsion, is about 20 °C to 60 °C. In a particular embodiment, a temperature of about 40 °C is used because an aqueous colloid in which the nanoparticles are formed directly, will often be substantially above 40 °C at the conclusion of the aqueous nanoparticle synthesis in order to impart high yield and crystallinity in a short amount of time. The aqueous colloid so formed, when combined with the other materials that comprise the non-polar constituents, conveniently at room temperature, will yield an emulsion with a temperature near 40 °C. Such low temperatures compared to prior art process temperatures are a significant advantage afforded by the inventive approach. And near this temperature, the emulsion separates into two phases within about 5 seconds to 10 minutes with substantially complete extraction of nanoparticles from the aqueous phase. It is understood by those skilled in the chemical engineering art, that the time required to complete phase separations will increase as the total volume of the emulsion increases.

In various embodiments, once active mixing of the emulsion is stopped, the emulsion will separate into two phases within about 60 minutes, within about 50 minutes, within about 40 minutes, within about 30 minutes, within about 20 minutes, within about 10 minutes, within about 5 minutes, within about 1 minute, within about 30 seconds, within about 10 seconds, within about 5 seconds.

The invention is operable when the addition of the substantially non-polar solvent is performed either within 0 to 1 hour after the end of step (c) or after the combined and mixed aqueous nanoparticle colloid and amphiphilic materials (e.g. heptanoic acid or octanoic acid) have separated into an aqueous remnant phase and an organic colloid phase.

Colloidal stability over the manufacturing process temperatures and product exposure temperatures, both high and low, needs to be considered. Product characteristics of concern are flowability at low operating temperatures (cold outdoor ambient temperatures) and flash-point at higher potential exposure temperatures.

In some embodiments, it has been found that the low temperature extraction of nanoparticles from the aqueous phase to the substantially non-polar phase requires high shear mixing.

Analysis of the final organic colloid material produced by the inventive process reveals that it is substantially free of constituents of the aqueous reaction mixture in which the nanoparticles were initially formed. Levels of water, nitrates, and nanoparticle stabilizer (e.g. methoxyacetic acid) were all lower than in the comparative process disclosed in the commonly assigned US Application 12/549,776 now US Publication 2010/0152077 A1 to Alston et al. Optionally, amounts of glycol ether or other addenda are added to the isolated substantially non-polar colloid, according to considerations previously stated.

It is well known in the art that extraction of metal oxide nanoparticles for fuel additives from aqueous colloid form to organic colloid form can be accomplished using amphiphilic materials together with non-polar solvents. For example, Blanchard et al. in US 2006/0005465 A1 disclose carboxylic acids having from 10 to 50 carbon atoms, and, in particular, 2-ethylhexanoic acid, as preferred amphiphilic agents. However, in this earlier work the pH of the aqueous metal oxide nanoparticle dispersions remained basic. More specifically, the pH of the reaction mixture (i.e. aqueous metal oxide nanoparticle dispersion) is described therein as being kept to a value of at least 7, more particularly at least 7.5, still more particularly in the range 7.5 to 10.5.

In contrast to the disclosures of US 2006/0005465 A1, the invention employs aqueous cerium-containing oxide nanoparticle dispersions that remain acidic. In particular embodiments the pH of the aqueous cerium-containing oxide nanoparticle dispersions are less than 7, less than 6, and less than 5. In a specific embodiment the pH of the aqueous cerium-containing oxide nanoparticle dispersion is about 4.5.

Heptanoic acid (C₇H₁₆O₂) and octanoic acid (C₈H₁₈O₂) are particular carboxylic acids that give the very surprising result of substantially complete extraction of cerium-containing oxide nanoparticles from an acidic aqueous phase into a substantially non-polar phase, do so at room temperature, and without the use of a promoter (e.g. alcohol or glycol ether). Even more surprising, 2-ethyl hexanoic acid (C₈H₁₈O₂), a closely related isomer of octanoic acid, does not function nearly as well as an amphiphilic agent in regard to the rate of extraction of cerium-containing oxide nanoparticles from an acidic aqueous phase to an organic phase, particularly so at room temperature. 2-Ethylhexanoic acid is widely used to prepare metal compounds that are soluble in non-polar organic solvents.

To further illustrate the invention and its advantages, the following examples are given, it being understood that the specific examples are not limiting.

### EXPERIMENTAL SECTION

Preparation of Ce_{0.6}Fe_{0.4}O_{(2-δ)} aqueous nanoparticle dispersion

To an 11 liter round bottom Type -316 stainless steel kettle or reactor with 3 mixing baffles, was added distilled water (Kettle Water), which was maintained at 70 °C. Using an impeller, the water was stirred at sufficient speed to provide good mixing. Then 98% methoxyacetic acid was added to the reactor. Two solution introduction jets directed to the impeller blades were put into the reactor and secured. An ammonium hydroxide solution was pumped through one jet at a rate of 69.3 ml /minute. A cerium-iron containing solution (334.5 gram of Ce(NO₃)₃·6H₂O and 207.5 gram of Fe(NO₃)₃·9H2O with distilled water to make 625 ml) was pumped through the other jet at a delivery rate of 125 ml/minute. The cerium-iron solution was purged from the delivery line with a 15 ml distilled water chase. Then a 50% H₂O₂ solution was pumped into the reactor at 9.38 ml/minute using a third jet and was followed by a brief distilled water flush. The reaction mixture was held at 70 °C for an additional sixty minutes, after which time it was cooled to 20 °C, providing a stable Ce_{0.6}Fe_{0.4}O_{2-δ} aqueous nanoparticle colloidal dispersion. The final dispersion was a clear, dark brown aqueous liquid that was washed and concentrated by diafiltration to an ionic conductivity of less than about 12 mS/cm and a pH of about 4.5.

Transmission electron microscopy (TEM) grain sizing revealed a particle size of 2.5 ± 0.5 nm. Electron diffraction revealed a distinct CeO₂ cubic fluorite electron diffraction pattern. No electron diffraction peaks characteristic of a crystalline iron oxide phase were detected. Analysis of ultra-high resolution STEM images and atomic elemental analysis by energy dispersive spectroscopy revealed a plurality of composite nanoparticles comprised of crystalline cerium oxide rich regions and amorphous iron oxide rich regions.

### EXAMPLE 1

### Ambient Temperature Extraction of Ce_{0.6}Fe_{0.4}O_{(2-δ)} with Heptanoic Acid

A 20 ml aliquot of Ce_{0.6}Fe_{0.4}O_{(2-δ)} aqueous nanoparticle dispersion prepared as described above, was added to a 40 ml glass vial at room temperature. To that was added 7.3 ml of heptanoic acid, the contents were shaken by hand for 30 sec, forming an emulsion. Then 13.2 ml of Kensol® 50H solvent was added, and the mixture was shaken again by hand for 30 sec, forming an emulsion. Upon standing for 5 minutes, the emulsion mixture was observed to separate into a dark brown upper organic layer and a clear light yellow aqueous lower layer. All of the materials used in this example were at an ambient temperature of about 20 °C.

Thus, substantially complete transfer of nanoparticles to the low polarity phase with rapid phase separation of the substantially non-polar colloid from the remnant aqueous phase was achieved at ambient temperature.

### EXAMPLE 2 (comparative)

Ambient Temperature Extraction of Ce_{0.6}Fe_{0.4}O_{(2-δ)} with a Heptanoic Acid and Kensol50H Mixture

A 10 ml aliquot of Ce_{0.6}Fe_{0.4}O_{(2-δ)} aqueous nanoparticle dispersion prepared as described above, was added to a 40 ml glass vial at room temperature. A mixture of 6.6 ml of Kensol® 50H and 3.7 ml of heptanoic acid was added to the vial, the contents were shaken by hand for 30 sec, forming an emulsion. The emulsion mixture was allowed to separate over night. A dark brown organic upper layer formed over a light brown aqueous lower layer. All of the materials used in this example were at an ambient temperature of about 20 °C.

While a substantial amount of extraction of the cerium-and iron-containing nanoparticles into the organic layer was achieved, the extraction was much slower and less efficient compared to the sequential addition method used in Example 1.

### EXAMPLE 3

### Ambient Temperature Extraction of Ce_{0.6}Fe_{0.4}O_{(2-δ)} with Octanoic Acid

An aliquot of 5 ml of aqueous colloid of Ce_{0.6}Fe_{0.4}O_{(2-δ)} prepared as described above, having a temperature of about 20 °C was added to a 15 ml vial. To that was added 1.83 ml of octanoic acid. The vial and contents were shaken by hand for 30 sec, thereby forming an emulsion. The emulsion then separated within seconds forming a dark upper organic phase over a nearly colorless yellow aqueous remnant phase. Next, 3.3 ml of Kensol® 50H was added to the vial, followed by 30 seconds of shaking. Again a formed emulsion separated in seconds to produce a dark upper phase above a light yellow aqueous remnant.

Long-term stability observations of samples of the above non-polar colloid were carried out while samples were held in separate 10 ml vials. One was held at room temperature (about 20 °C) and the other at 40 °C. At the conclusion of 6 months, the non-polar colloids remained essentially non-turbid and free of settled precipitates.

### EXAMPLE 4 (comparative)

### Ambient Temperature Extraction of Ce_{0.6}Fe_{0.4}O_{(2-δ)} with Octanoic Acid and Kensol® 50H Mixture

A 10 ml aliquot of Ce_{0.6}Fe_{0.4}O_{(2-δ)} aqueous nanoparticle dispersion prepared as described above, was added to a 40 ml glass vial at room temperature. A mixture of 6.6 ml of Kensol® 50H and 3.7 ml of octanoic acid was added to the vial, the contents were shaken by hand for 30 sec, forming an emulsion. The emulsion mixture was allowed to separate over night. A dark brown organic upper layer formed over a translucent brown aqueous lower layer. All of the materials used in this example were at an ambient temperature of about 20 °C.

While some extraction of the cerium-and iron-containing nanoparticles was achieved, the extraction was much slower and less efficient compared to the sequential addition method used in Example 3.

### EXAMPLE 5

### Scale-up Extraction of Ce_{0.6}Fe_{0.4}O_{(2-δ)} with Octanoic Acid

A 12 liter aliquot of Ce_{0.6}Fe_{0.4}O_{(2-δ)} aqueous nanoparticle dispersion prepared as described above, was heated to a temperature of 60 °C and transferred to a 60 liter stainless steel reaction vessel. The dispersion was stirred at about 500 to 1000 rpm using a 4" R100 (Rushton) mixer. Then 4116 ml of octanoic acid was added to the mixing vortex. Next 7944 ml of Kensol® 50H was added. The mixer speed was increased to about 1400 rpm and the mixture was stirred for 5 minutes. The temperature of the reaction mixture dropped as a result of the additions of room temperature materials, but remained above 40 °C. The mixer was turned off and the mixture was held for 5 minutes. The contents were found to separate into a substantially non-polar colloid phase above a remnant aqueous phase. The colorless aqueous phase was drained from the reaction vessel and the substantially non-polar colloidal was collected. A small sample was taken from the non-polar colloidal and the per cent solids content was determined.

The solids content of the non-polar colloidal was then adjusted to 3.5 % solids by the addition of the appropriate amount of octanoic acid and Kensol® 50H. The volume ratio of octanoic acid and Kensol® 50H was the same as described earlier. Subsequently, a mixture of 6.0 wt% PIBSA (polyisobutylene succinic anhydride) and 15 ppm Stadis 450 in Kensol 50H was added to bring the solids content down to 2.0 wt%.

Stability of the final non-polar colloid phase was found to be excellent after a two month period, remaining non-turbid and free of settled precipitates.

### EXAMPLE 6

### Use of Glycol Ether Addenda

A 22.7 ml aliquot Ce_{0.6}Fe_{0.4}O_{(2-δ)} aqueous nanoparticle dispersion prepared as described above, was heated to a temperature of 60 °C and transferred to a reaction vessel. To that was added 10.7 ml of octanoic acid. The vessel and contents were shaken by hand for 30 sec, forming an emulsion. The emulsion then separated within seconds forming a dark upper organic phase over a nearly colorless yellow aqueous remnant phase. Next, 24.5 ml of Kensol® 50H was added to the vessel, followed by 30 seconds of shaking. The formed emulsion separated in seconds into two phases, a dark upper substantially non-polar colloidal phase above an aqueous remnant. 36 ml the organic substantially non-polar colloidal phase was separated out by pipetting. Next, 2.67g of propylene glycol monomethyl ether (PGME) and 1.78g of diethylene glycol monomethyl ether (DEGME) were added to the organic substantially non-polar colloid.

Long-term stability observations of a 10 ml sample of the above non-polar colloid were carried out. Behavior of the non-polar colloid at -19 °C was also studied and it was found to remain a clear single phase liquid under this condition.

### EXAMPLE 7

### Ambient Temperature Extraction of Ce_{0.6}Fe_{0.4}O_{(2-δ)} with 2-Ethylhexanoic Acid

A 20 ml aliquot of Ce_{0.6}Fe_{0.4}O_{(2-δ)} aqueous nanoparticle dispersion prepared as described above, was added to a 40 ml glass vial at room temperature. To that was added 7.3 ml of 2-ethylhexanoic acid, the contents were shaken by hand for 30 sec, forming an emulsion. Then 13.2 ml of Kensol® 50H solvent was added, and the mixture was shaken again by hand for 30 sec, forming an emulsion. Upon standing for 1-2 hours, the emulsion mixture was observed to separate into a translucent brown upper organic layer and a dark muddy brown aqueous lower layer. All of the materials used in this example were at an ambient temperature of about 20 °C.

Thus, a substantially incomplete transfer of nanoparticles from the acidic aqueous phase to the low polarity phase resulted; and a relatively slow phase separation of the substantially non-polar colloid phase from the remnant aqueous phase were achieved at ambient temperature.

## Claims

1. A process for preparing a colloidal dispersion, comprising:
(a) preparing an aqueous acidic colloidal dispersion of cerium-containing oxide nanoparticles;
(b) adding a monocarboxylic acid having from 7 to 9 carbon atoms;
(c) mixing the liquid mixture of step (b) to form an emulsion;
(d) separating the emulsion at a predetermined temperature for a predetermined time into a non-polar colloidal phase and a remnant aqueous phase; and,
(e) collecting the separated non-polar colloidal dispersion of cerium-containing oxide nanoparticles,
wherein the process further comprises
either
adding a non-polar solvent to the emulsion formed in step (c) within 0 to 1 hour after the end of step (c),
or
adding a non-polar solvent after the emulsion formed in step (c) has separated into the non-polar colloidal phase and the remnant aqueous phase.

2. The process of claim 1, wherein the emulsion is separated at a temperature ranging from 20 °C to 60 °C.

3. The process of claim 1, wherein the emulsion is separated within 60 minutes.

4. The process of claim 1, wherein said monocarboxylic acid is heptanoic acid or octanoic acid.

5. The process of claim 1, wherein said cerium-contain oxide nanoparticles have a nominal composition of Ce(1-x)FexO(2-δ), wherein x ranges from about 0.01 to 0.8, and (2-δ) ranges from about 1 to 2.

6. The process of claim 1, wherein said aqueous colloidal dispersion of cerium-containing oxide nanoparticles is prepared without a conventional nanoparticle isolation step.

7. The process of claim 1, wherein the non-polar solvent is added to the emulsion formed in step (c) within 0 to 1 hour after the end of step (c).

8. The process of claim 1 wherein the non-polar solvent is added after the emulsion formed in step (c) has separated into the non-polar colloidal phase and the remnant aqueous phase.

9. The process of claim 1, further comprising adding a glycol ether to the separated non-polar colloidal dispersion of cerium-containing oxide nanoparticles.

10. The process of claim 9, wherein the glycol ether is propylene glycol monomethyl ether, diethylene glycol monomethyl ether, or a combination thereof.

11. The process of claim 1, wherein the emulsion is separated at a temperature ranging from 20 °C to 40 °C.

12. The process of claim 1, wherein the emulsion is separated within 30 minutes.

13. The process of claim 1, wherein the emulsion is separated within 10 minutes.

14. The process of claim 1, wherein the emulsion is separated within 5 minutes.

15. The process of claim 1, wherein the cerium-containing oxide comprises a doped cerium oxide.

## Patentansprüche

1. Verfahren zum Herstellen einer kolloidalen Dispersion, umfassend:
(a) Herstellen von einer wässrigen sauren kolloidalen Dispersion von cerhaltigen Oxid-Nanopartikeln;
(b) Zugeben von einer Monocarbonsäure, die 7 bis 9 Kohlenstoffatome aufweist;
(c) Mischen von der flüssigen Mischung aus dem Schritt (b), um eine Emulsion zu bilden;
(d) Trennen von der Emulsion bei einer vorbestimmten Temperatur für eine vorbestimmte Zeit in eine unpolare kolloidale Phase und eine restliche wässrige Phase; und
(e) Sammeln von der abgetrennten unpolaren kolloidalen Dispersion von cerhaltigen Oxid-Nanopartikeln,
wobei das Verfahren ferner das Folgende umfasst:
Zugeben von einem unpolaren Lösungsmittel zu der Emulsion, die in dem Schritt (c) gebildet wurde, innerhalb von 0 bis 1 Stunde nach dem Ende des Schritts (c)
oder
Zugeben von einem unpolaren Lösungsmittel, nachdem sich die Emulsion, die in dem Schritt (c) gebildet wurde, in die unpolare kolloidale Phase und die restliche wässrige Phase getrennt hat.

2. Verfahren nach Anspruch 1, wobei die Emulsion bei einer Temperatur, die von 20 °C bis 60 °C reicht, getrennt wird.

3. Verfahren nach Anspruch 1, wobei die Emulsion innerhalb von 60 Minuten getrennt wird.

4. Verfahren nach Anspruch 1, wobei die Monocarbonsäure Heptansäure oder Octansäure ist.

5. Verfahren nach Anspruch 1, wobei die cerhaltigen Oxid-Nanopartikel eine nominelle Zusammensetzung von Ce(1-x)FexO(2-δ) aufweisen, wobei x von etwa 0,01 bis 0,8 reicht und (2-δ) von etwa 1 bis 2 reicht.

6. Verfahren nach Anspruch 1, wobei die wässrige kolloidale Dispersion von cerhaltigen Oxid-Nanopartikeln ohne einen konventionellen Nanopartikel-Isolationsschritt hergestellt wird.

7. Verfahren nach Anspruch 1, wobei das unpolare Lösungsmittel der Emulsion, die in dem Schritt (c) gebildet wurde, innerhalb von 0 bis 1 Stunde nach dem Ende des Schritts (c) zugegeben wird.

8. Verfahren nach Anspruch 1, wobei das unpolare Lösungsmittel zugegeben wird, nachdem sich die Emulsion, die in dem Schritt (c) gebildet wurde, in die unpolare kolloidale Phase und die restliche wässerige Phase getrennt hat.

9. Verfahren nach Anspruch 1, ferner umfassend das Zugeben eines Glycolethers zu der abgetrennten unpolaren kolloidalen Dispersion von cerhaltigen Oxid-Nanopartikeln.

10. Verfahren nach Anspruch 9, wobei der Glycolether Propylenglycolmonomethylether, Diethylenglycolmonomethylether oder eine Kombination davon ist.

11. Verfahren nach Anspruch 1, wobei die Emulsion bei einer Temperatur, die von 20 °C bis 40 °C reicht, getrennt wird.

12. Verfahren nach Anspruch 1, wobei die Emulsion innerhalb von 30 Minuten getrennt wird.

13. Verfahren nach Anspruch 1, wobei die Emulsion innerhalb von 10 getrennt wird.

14. Verfahren nach Anspruch 1, wobei die Emulsion innerhalb von 5 Minuten getrennt wird.

15. Verfahren nach Anspruch 1, wobei das cerhaltige Oxid ein dotiertes Ceroxid umfasst.

## Revendications

1. Procédé pour préparer une dispersion colloïdale, comprenant :
(a) préparer une dispersion colloïdale acide aqueuse de nanoparticules d'oxyde contenant du cérium ;
(b) ajouter de l'acide mono carboxylique ayant de 7 à 9 atomes de carbone ;
(c) mélanger le mélange liquide de l'étape (b) pour former une émulsion ;
(d) séparer l'émulsion à une température prédéterminée et pendant une durée prédéterminée pour obtenir une phase colloïdale non polaire et une phase aqueuse résiduelle ; et,
(e) collecter la dispersion colloïdale non polaire de nanoparticules d'oxyde contenant du cérium,
dans lequel le procédé comprend en outre
soit
l'ajout d'un solvant non polaire à l'émulsion formée au cours de l'étape (c) dans l'intervalle de 0 à 1 heure après la fin de l'étape (c),
soit
l'ajout d'un solvant non polaire après que l'émulsion formée au cours de l'étape (c) se soit séparée pour former la phase colloïdale non polaire et la phase aqueuse résiduelle.

2. Procédé selon la revendication 1, dans lequel l'émulsion est séparée à une température dans une plage allant de 20 °C à 60 °C.

3. Procédé selon la revendication 1, dans lequel l'émulsion est séparée dans un intervalle de 60 minutes.

4. Procédé selon la revendication 1, dans ledit acide monocarboxylique est l'acide heptanoïque ou l'acide octanoïque.

5. Procédé selon la revendication 1, dans lequel lesdites particules d'oxyde contenant du cérium ont une composition nominale de Ce(1-x)FexO(2-5), dans laquelle x est dans une plage d'environ 0.01 à 0.8, et (2-δ) est dans une plage d'environ 1 à 2.

6. Procédé selon la revendication 1, dans lequel ladite dispersion colloïdale aqueuse de nanoparticules d'oxyde contenant du cérium est préparée sans une étape conventionnelle d'isolement des nanoparticules.

7. Procédé selon la revendication 1, dans lequel le solvant non polaire est ajouté à l'émulsion formée au cours de l'étape (c) dans l'intervalle de 0 à 1 heure après la fin de l'étape (c).

8. Procédé selon la revendication 1, dans lequel le solvant non polaire est ajouté après que l'émulsion formée au cours de l'étape (c) ait été séparée pour former la phase colloïdale non polaire et la phase aqueuse résiduelle.

9. Procédé selon la revendication 1, comprenant en outre l'ajout d'un éther de glycol à la dispersion colloïdale non polaire séparée de nanoparticules d'oxyde contenant du cérium.

10. Procédé selon la revendication 9, dans lequel l'éther de glycol est l'éther monométhylique de polypropylène glycol, l'éther monométhylique de diéthylène glycol, ou une combinaison de ceux-ci.

11. Procédé selon la revendication 1, dans lequel l'émulsion est séparée à une température dans la plage de 20 °C à 40 °C.

12. Procédé selon la revendication 1, dans lequel l'émulsion est séparée dans un intervalle de 30 minutes.

13. Procédé selon la revendication 1, dans lequel l'émulsion est séparée dans un intervalle de 10 minutes.

14. Procédé selon la revendication 1, dans lequel l'émulsion est séparée dans un intervalle de 5 minutes.

15. Procédé selon la revendication 1, dans lequel l'oxyde contenant du cérium comprend un oxyde de cérium dopé.
